# EUROPEAN PATENT APPLICATION

(11) **EP 2 626 960 A2**
(43) Date of publication of application: **14.08.2013**
(21) Application number: 13154561.8
(22) Date of filing: 08.02.2013
(51) Int. Cl.: H01S 3/16

(54) **Active laser medium including nanoparticles, laser apparatus including the active laser medium, and method of manufacturing nanoparticles**

(30) Priority: 10.02.2012 RU 2012104712; 10.02.2012 RU 2012104713; 19.09.2012 KR 20120104211
(71) Applicant: Samsung Electronics Co., Ltd, Gyeonggi-do 443-742 (KR)
(72) Inventor: Igumenov, Igor Konstantinovich, 630090 Novosibirsk (RU); Kuchumov, Boris Maksimovich, 630117 Novosibirsk (RU); Kuchyanov, Alexander Sergeevich, 630090 Novosibirsk (RU); Parkhomenko, Roman Grigorevich, 658820 Altay Region (RU); Plekhanov, Alexander Ivanovich, 630090 Novosibirsk (RU); Trubin, Sergey Vladimirovich, 630055 Novosibirsk (RU); Maltseva, Elena Olegovna, 630090 Novosibirsk (RU)
(74) Representative: Zijlstra, Robert Wiebo Johan

(57) **Abstract**

An active laser medium includes a metal nanoparticle and a shell surrounding the metal nanoparticle, the shell including a luminophor, wherein a luminescence spectrum of the luminophor overlaps with a peak of surface plasmon resonance of the metal nanoparticle.

## Description

### BACKGROUND OF THE INVENTION

The present disclosure relates to active laser mediums including nanoparticles, laser apparatuses including the active laser mediums, and methods of manufacturing nanoparticles.

Metal nanoparticles have found applications in many fields of modern research and technologies: fluorescent spectroscopy, therapy and visualization of tumors, creation of sensors of various types, low-threshold lasers, panels of increased luminosity and metamaterials (hyperlenses, invisible coating devices, etc.).

Metal nanoparticles have gained such widespread use due to their strong and specific interaction with an electromagnetic wave and the presence of surface plasmon resonance - frequency bands, in which an absorption limit is considerably increased because of coincidence of a frequency of an incident light with a frequency of oscillations of surface plasmons (collective oscillations of electrons of conduction in a particle concerning the ionic skeleton).

It has been determined that adding metal nanoparticles into a solution of organic dye, in case of coincidence of a frequency of surface plasmon resonance with a contour of a line of a luminescence of organic dye, leads to magnification of its intensity of luminescence which is caused by the formation of complex organic molecule - metal nanoparticles, in which the radiation lifetime of an excited level is less than at a molecule of dye without the metal nanoparticle (see Mertens H., Koenderink A.F., Polman A, "Plasmon-enhanced luminescence near noble-metal nanospheres: Comparison of exact theory and an improved Gersten and Nitzan model", Phys. Rev. B. Vol. 76., P. 115-123, 2007).

It has been shown that adding a fractal aggregate of silver into the active medium of the cylindrical microresonator of the laser on dye rhodamine 6G leads to depression of a threshold of laser generation due to joint excitement of collective plasmon modes of metal nanostructure and modes of the microresonator (see Zakovryashin N.S., Perminov S.V., Kuch'yanov A.S., Safonov V.P., "Pulsed lasing in dye molecules - silver nanoagreggates - microcavity composites at nano- and picoseconds excitation", The Fourth International Symposium "Modern Problems of Laser Physics", Novosibirsk, Russia, August 22-27, 2004, Proceedings Eds. Sergey N. Bagaev, Pavel V. Pokasov, P. 404-407).

The effect of random generation in a suspension consisting of a solution of organic dye rhodamine 6G and polydisperse silver powder with an average diameter of particles 55 nanometers is described in Dice G. D., Mujumdar S., and Elezzabi A. Y., "Plasmonically enhanced diffusive and subdiffusive metal nanoparticle-dye random laser", Appl. Phys. Lett., Vol. 86, P. 131105, 2005. It was noted that, in such a system, researchers observed the intensity increasing, a line width decreasing, and depression of a threshold of laser radiation in comparison with the laser in which silver nanoparticles are changed on dielectric nanoparticles. However, efficiency of interaction MNP with dye molecules in such a system is underestimated because of the effect of a luminescence quenching. In the Mertens article it is noted that luminescence amplification occurs in a case when the distance between a molecule of dye and an MNP surface exceeds several nanometers, and otherwise, the quenching is observed.

United States Patent No. 7,569,188 describes a new class of devices - a source of plasmon and optical coherent fields named SPASER (Surface Plasmon Amplification by Stimulated Emission of Radiation). SPASER is a nanometer analogue of the laser, in which metal nanoparticles perform as the resonators within the SPASER. It is known that a quality of such nanoresonators is very low. To overcome losses in the resonator, MNP is surrounded by a luminophor which represents, for example, molecules of organic dye. During luminophor excitement from the outside there is a resonance transmission of energy from an excited level of a molecule of organic dye to a surface plasmon, which in turn creates the local electromagnetic fields in addition to boosting a photoluminescence of a luminophor. Thus, the number of surface plasmons increases in a snowball effect and feedback is realized.

One of the methods of implementation of a SPASER is surrounding MNP by a silica shell with the organic dye which has a spectrum of a luminescence which overlaps with a band of surface plasmon resonance and providing a layer of silica between the MNP and silica shell in order to avoid quenching a luminophor (see Noginov M. A. et al., "Demonstration of a spaser-based nanolaser", Nature, Vol. 460, P. 1110-1113, 2009). The creation of an MNP shell containing a luminophor can be executed, for example, from polyallylamine hydrochloride (PAH) or sulfonated polystyrene (PSS) (see Schneider G., Decher G., "Distance-dependent fluorescence quenching on gold nanoparticles ensheathed with layer-by-layer assembled polyelectrolytes," Nano Lett., Vol. 6. Nº 3., P. 530-536, 2006), or polyaniline (PANI) which possesses an electrical conductivity (see Xing S. at al., "Highly controlled core/shell structures: tunable conductive polymer shells on gold nanoparticles and nanochains", J. Mater. Chem., Vol. 19., P. 3286-3291, 2009), or polyisopropylacrylamide (PNIPA) which possesses thermosensitivity (Li D., He Q., Li J., "Smart core/shell nanocomposites: Intelligent polymers modified gold nanoparticles", Adv. Colloid Interface Sci., Vol. 149, P. 28-38, 2009). However there is no data about attempts to use the medium consisting of MNP in silica shell with dye, as the active laser medium.

Various methods of sedimentation of gold nanoparticles on silica microspheres are known, for example, a laser ablation method and a method involving sedimentation from a liquid phase. The main drawbacks of the given methods are the presence of a set of stages of sedimentation, complexity of control of sizes of nanoparticles, and probable aggregation of nanoparticles after solvent removal.

A method of obtaining opal-similar structures with gold nanoparticles, in which sedimentation is performed in two stages, is known. The first stage includes obtaining gold nanoparticles by laser ablation, the transfer of the gold nanoparticles being made in ethanolic solution, by using an impact of laser radiation with a wave length of 1060 nanometers on the gold target, located in ethanolic solution. The gold nanoparticles transfer in ethanolic solution under the influence of a laser impulse. At the second stage, the multiple infiltration of gold nanoparticles in an opal matrix is performed, for which purpose the sample with the superimposed silica microspheres is drowned in the solution, obtained at the first stage, and dried using air. This procedure is iterated up to 100 times (see V. S. Gorelik, L I. Zlobina, V. A. Karavanskii, O. A. Troitskii, R I. Chanieva, Inorganic Materials 46 (2010), P. 862-865).

However, the presence of two stages of sedimentation and the lack of control over the sizes of gold nanoparticles both at a stage of obtaining, and at a stage of infiltration, are drawbacks of the given method.

Methods of sedimentation of gold nanoparticles in pores of a matrix of microspheres by restoration of gold-containing solutions, for example chloroauratehydrogen acid, by using various restoratives at the presence of stabilizers, e.g., SAW etc., are known.

For example, a method of sedimentation of gold nanoparticles on a surface of silica microspheres is known and includes the following steps. A glass substrate with the superimposed microspheres is placed at an angle of 65° in 2-3 ml of the solution containing 0.01% HAuCl4, 0.01% of tannic acid, 0.04%, citrate of sodium and 0.26 mm of a solution of potassium carbonate. Then, the solution will completely evaporate and will be infiltrated in a matrix of silica microspheres under the influence of capillary forces. As a result, gold nanoparticles of sizes from 3.5 to 6.5 nanometers are obtained from a solution (see A.Z. Khokhar, F. Rahman, N.P. Johnson, Journal of Physics and Chemistry of Solids 72 (2011), P. 185-189).

This known method possesses essential drawbacks, such as the impossibility of control of sizes of nanoparticles, the presence of SAW, and also the aggregation of nanoparticles after removal of a solvent.

H.M. Yates, M.E. Pemble, H. Miguez, A. Blanco, C. Lopez, F. Meseguer, L. Vazquez., J. Crys. Growth 193 (1998), P. 9-15, introduces a method of sedimentation of nanoparticles of indium phosphide (InP) by performing an operation of chemical sedimentation of the nanoparticles from a gas phase using organometallic predecessors, by combined sedimentation of precursors of trimethylindium and phosphine on a substrate with preliminary superimposed silica microspheres with sizes from 230 to 535 nanometers. A substrate is placed in the reactor at atmospheric pressure, heated up to 200-400°C, and then steam including precursors is submitted from two independent sources, thus varying the temperatures of the steam from 52°C to 150°C for trimethylindium and to 350 °C for phosphine. The number of cycles of sedimentation is from 2 to 10 for each reactant, and the duration of cycles is from 25 minutes up to 1 hour. As a result, InP nanoparticles having a size of 50 nanometers are obtained.

Drawbacks of this method include the complexity and duration of the method.

### SUMMARY OF THE INVENTION

Aspects of the exemplary embodiments may overcome the above disadvantages associated with the related art techniques. It is understood, however, that aspects of the exemplary embodiments are not required to overcome the above disadvantages associated with the related art techniques.

Provided are active laser mediums including nanoparticles.

Provided are laser apparatuses including the active laser mediums.

Provided are methods of manufacturing nanoparticles.

According to an aspect of an exemplary embodiment, there is provided an active laser medium including: a metal nanoparticle; and a shell surrounding the metal nanoparticle, the shell including a luminophor, wherein a luminescence spectrum of the luminophor overlaps with a peak of surface plasmon resonance of the metal nanoparticle.

The active laser medium may have a form of a colloid or a form of a solid-state film.

The luminophor may include a plurality of quantum dots having the luminescence spectrum that overlaps with the peak of the surface plasmon resonance of the metal nanoparticle.

The luminophor may include an organic dye having the luminescence spectrum that overlaps with the peak of the surface plasmon resonance of the metal nanoparticle.

The organic dye may be fluorescein.

The shell may include a silica material.

The shell may include a polymer material.

The metal nanoparticle may be a gold nanoparticle.

According to an aspect of another exemplary embodiment, there is provided a laser apparatus including: an active laser medium including a metal nanoparticle; and a shell surrounding the metal nanoparticle, the shell including a luminophor, wherein a luminescence spectrum of the luminophor overlaps with a peak of surface plasmon resonance of the metal nanoparticle; a pumping light source for radiating a pumping light to the active laser medium; and a resonator for induction-amplifying light excited in the active laser medium by the pumping light.

The resonator may include a pair of confocal mirrors that face each other across the active laser medium and are positioned such that the active laser medium is between the confocal mirrors.

The active laser medium may be disposed on a focal plane of the pair of confocal mirrors.

A focusing lens for focusing the pumping light radiated from the pumping light source on the active laser medium may be disposed between the pumping light source and the active laser medium.

According to an aspect of another exemplary embodiment, there is provided a method of manufacturing nanoparticles including: disposing a substrate, on which silica microspheres are added, into a reaction chamber in a first vacuum state; heating the substrate and supplying a precursor steam onto the substrate; delivering air into the reaction chamber and forming a second vacuum state by increasing an atmospheric pressure of the reaction chamber; maintaining the second vacuum state for a predetermined time period; and performing a pumping operation to allow the atmospheric pressure of the reaction chamber to reach the first vacuum state.

The precursor steam may include a volatile organometallic complex.

The precursor steam may include gold.

The precursor steam may include dipivaloylmethanate dimethylgold.

The supplying of the precursor steam, the forming of the second vacuum state by increasing the atmospheric pressure of the reaction chamber, the maintaining of the second vacuum state, and the performing of the pumping operation to allow the atmospheric pressure of the reaction chamber to reach the first vacuum state may be repeated for a number of repetitions until a nanoparticle with a predetermined size is formed.

The nanoparticles each may have a diameter of 5 nm to 20 nm as the predetermined size.

The number of repetitions may be from 30 to 100.

The atmospheric pressure of the first vacuum state may be 10⁻⁴ torr (1.33 x 10⁻⁷ bar).

In the supplying of the precursor steam, the substrate may be heated to a temperature of 192° C to 230° C.

In the supplying of the precursor steam, a temperature of the precursor steam may be from 45° C to 56° C.

In the supplying of the precursor steam, a time period during which the precursor steam is supplied may be 1.5 seconds or greater.

The atmospheric pressure of the second vacuum state may be 10⁻² torr (1.33 x 10⁻⁵ bar).

A time period during which the second vacuum state is maintained may be two seconds or greater.

According to an aspect of another exemplary embodiment, there is provided an active laser medium including: a metal nanoparticle; and a shell surrounding the metal nanoparticle, the shell including a luminophor having a predetermined luminescence spectrum, wherein the shell includes one of a silica shell or a polymer shell.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 schematically illustrates a core-shell structure including a metal nanoparticle and a shell, which constitutes an active laser medium according to an exemplary embodiment;
FIG. 2 is a graph illustrating a spectrum of stimulated radiation of the active laser medium, a spectrum of extinction of gold nanoparticles constituting the active laser medium, and a spectrum of luminescence of a luminophor;
FIG. 3 schematically shows a laser apparatus according to an exemplary embodiment and a scheme of an experimental facility for observing a spectrum of luminescence of the laser apparatus according to an exemplary embodiment;
FIG. 4 is a graph illustrating a luminescence spectrum of the laser apparatus according to an exemplary embodiment and a luminescence spectrum of a laser apparatus according to a comparison example;
   FIG. 5 is a flowchart schematically illustrating a method of manufacturing nanoparticles, according to an exemplary embodiment; and
FIGS. 6 through 8 show microphotographs of various sized-nanoparticles precipitated on silica microspheres produced using the method of manufacturing nanoparticles according to an exemplary embodiment.

### DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present description. Expressions such as "at least one of," when preceding a list of elements, modify the entire list of elements and do not modify the individual elements of the list.

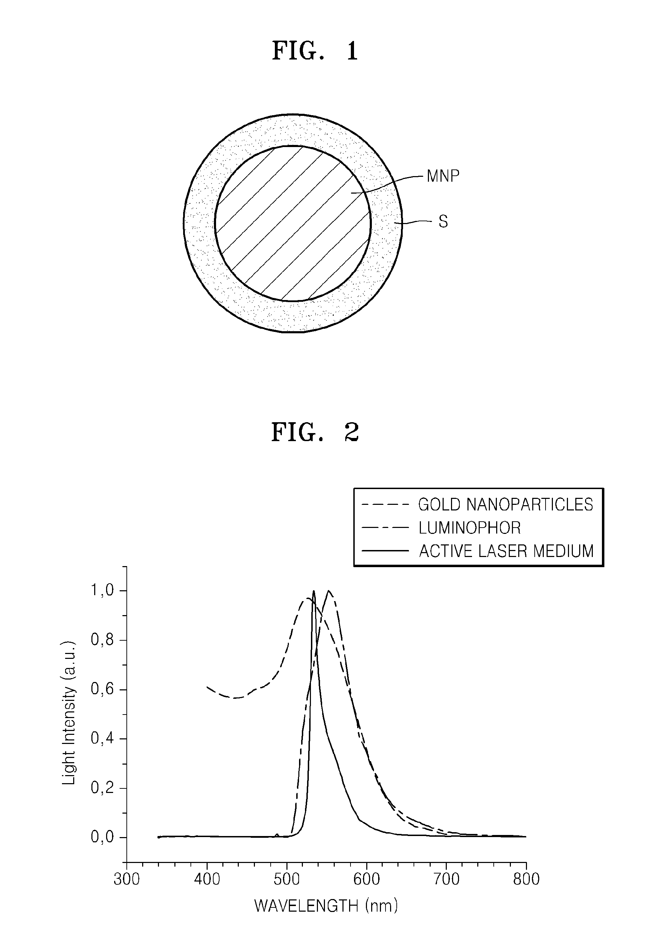

FIG. 1 schematically illustrates a core-shell structure including a metal nanoparticle and a shell, which constitutes an active laser medium according to an exemplary embodiment.

Referring to FIG. 1, the core-shell structure that is included in the active laser medium includes a metal nanoparticle (hereinafter, also referred to as MNP) and a shell S surrounding the MNP. The shell S includes a luminophor having a luminescence spectrum that overlaps with the peak of surface plasmon resonance of the MNP.

The MNP causes the surface plasmon resonance due to a strong and specific interaction with an electromagnetic wave, and has a very high limit absorbance with respect to incident light within a frequency band of the surface plasmon resonance. The MNP may be formed of a metal material having high electric conductivity, for example, gold.

As described above, the shell S includes a luminophor, and in addition, may include silica or a polymer.

A plural number of quantum dots with a luminescence spectrum that overlaps with the peak of the surface plasmon resonance of the MNP may be used as the luminophor. Each quantum dot may include any one of an Si-based nanocrystal, a II-V group-based compound semiconductor nanocrystal, a III-V group-based compound semiconductor nanocrystal, a IV-VI group-based compound semiconductor nanocrystal, or a mixture thereof. The energy level of a quantum dot is changed according to the material and size of the quantum dot, and thus, the material and size of the quantum dot may be determined so that a luminescence spectrum thereof overlaps with the peak of an extinction spectrum of the MNP.

In addition, an organic dye with a luminescence spectrum that overlaps with the peak of the surface plasmon resonance of the MNP may be used as the luminophor L. For example, fluorescein may be used as the organic dye.

FIG. 2 is a graph illustrating a spectrum of stimulated radiation of the active laser medium, a spectrum of extinction of gold nanoparticles constituting the active laser medium, and a spectrum of luminescence of a luminophor.

In the case of FIG. 2, gold nanoparticles are used as MNPs, and fluorescein is used as the luminophor.

Referring to the graph of FIG. 2, the spectrum of luminescence of the luminophor overlaps with the spectrum of extinction of the gold nanoparticles, and the stimulated radiation of the active laser medium is between the spectrum of luminescence of the luminophor and the spectrum of extinction of the gold nanoparticles, which is consistent with theoretical representations (see Stockman M.I., "The spaser as a nanoscale quantum generator and ultrafast amplifier", J. Opt., Vol. 12., P. 1-13, 2010).

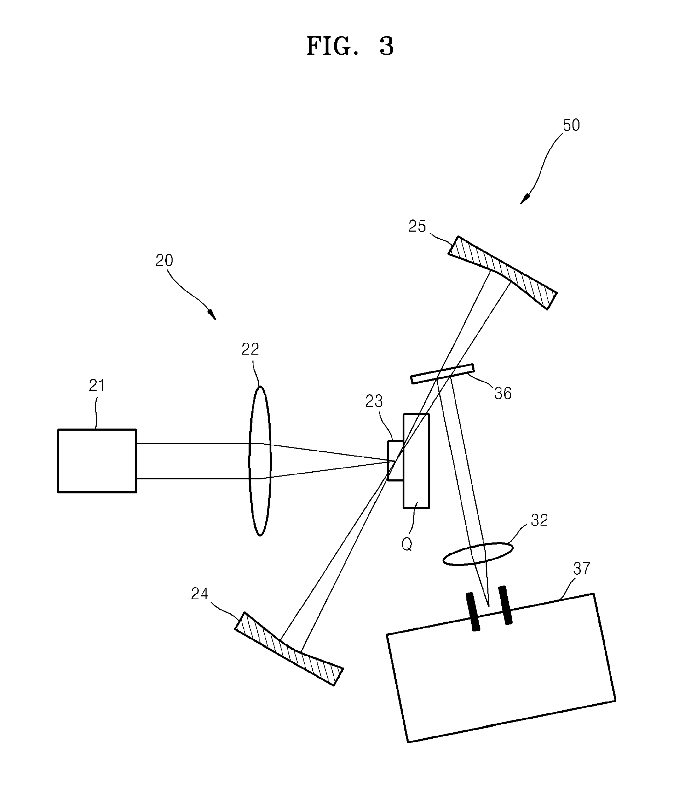

FIG. 3 shows a scheme of an experimental facility 50 for observing the spectrum of luminescence of a laser apparatus 20 according to an exemplary embodiment.

The experimental facility 50 for observing the spectrum of luminescence includes the laser apparatus 20 including an active laser medium 23, a cuvette Q in which a sample of the active laser medium 23 is disposed, a spectrometer 37, a glass plate 36 for diverging a portion of the light emitted from the laser apparatus 20 towards the spectrometer 37, and a focusing lens 32 for focusing the diverged portion of light on the spectrometer 37.

The laser apparatus 20 includes the active laser medium 23, a pumping light source 21 for radiating light (e.g., a pumping light) to the active laser medium 23, and a resonator for induction-amplifying the light excited in the active laser medium 23 by the pumping light.

As described with reference to FIGS. 1 and 2, the active laser medium 23 according to an exemplary embodiment has a structure in which a shell including a luminophor having a predetermined luminescence spectrum surrounds an MNP.

The resonator may be formed of a pair of confocal mirrors 24 and 25 that face each other across the active laser medium 23, the active laser medium 23 being disposed therebetween, and the active laser medium 23 may be disposed on a focal plane of the pair of confocal mirrors.

In addition, the focusing lens 22 for focusing the light radiated from the pumping light source 21 on the active laser medium 23 may be disposed between the pumping light source 21 and the active laser medium 23.

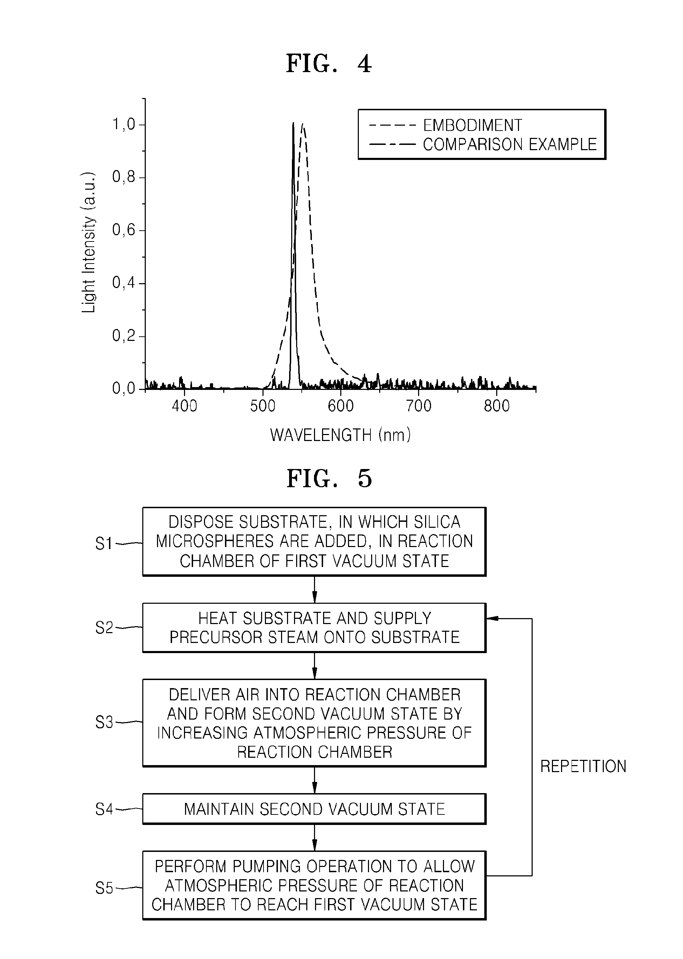

FIG. 4 is a graph illustrating a luminescence spectrum of the laser apparatus 20 according to the present exemplary embodiment and a luminescence spectrum of a laser apparatus according to a comparison example.

A colloid including gold nanoparticles with concentration *c* = 2·10¹² cm⁻³, surrounded by silica shells containing fluorescein 10⁻² M, is used in the laser apparatus 20 according to the present exemplary embodiment, and a solution of fluorescein (10⁻² M) with gold nanoparticles added thereto (concentration *c* = 2·10¹² cm⁻³) and without the silica shells is used in the laser apparatus according to the comparison example.

As a result of the experiment, it was observed that a threshold of generation of laser radiation was reached at pump power 15 megawatt/cm² in the case of the present exemplary embodiment and a threshold of generation of laser radiation was reached at pump power 210 megawatt/cm² in the case of the comparison example. That is, it has been discovered that the threshold of generation of the laser radiation in the present exemplary embodiment is more than 15 times lower than that in the comparison example. The graph of FIG. 4 shows a spectrum in which light intensity has been normalized for the case of the present exemplary embodiment at a pump power 40 megawatt/cm² and for the case of the comparison example at a pump power 200 megawatt/cm².

From the above result of the experiment, it is understood that, according to exemplary embodiments, a very efficient laser radiation performance may be obtained by using NMPs, each surrounded with a shell including a luminophor, as an active laser medium.

FIG. 5 is a flowchart schematically illustrating a method of manufacturing nanoparticles, according to an exemplary embodiment.

The method shown in FIG. 5 includes disposing a substrate, in which silica microspheres are added, into a reaction chamber in a first vacuum state (operation S1), heating the substrate and supplying steam (e.g., a precursor steam) onto the substrate (operation S2), delivering air into the reaction chamber and forming a second vacuum state by increasing the atmospheric pressure of the reaction chamber (operation S3), maintaining the second vacuum state (operation S4), and performing a pumping operation to allow the atmospheric pressure of the reaction chamber to reach the first vacuum state (operation S5).

Operations S2 through S5 may be repeated until nanoparticles having desired sizes are formed. For example, nanoparticles each having a diameter of 5 nm to 20 nm may be formed, and the number of repetitions may be from 30 to 100. It is understood, however, that the nanoparticles may have diameters greater or less than 5 nm to 20 nm, and the number of repetitions may be greater or less than 30 to 100.

A volatile organometallic complex may be used as a precursor to be included in the precursor steam for formation of nanoparticles. The precursor may include gold, and for example, dipivaloylmethanate dimethylgold may be used as the precursor.

In operation S1, the atmospheric pressure of the first vacuum state may be about 10⁻⁴ torr (1.33 x 10⁻⁷ bar). To this end, after disposing the substrate, in which silica microspheres are added, in the reaction chamber, a vacuum may be formed in the reaction chamber until the atmospheric pressure of the first vacuum state reaches 10⁻⁴ torr.

In operation S2, the substrate may be heated to a temperature of 192°C to 230°C, and the temperature of the precursor steam may be from 45°C to 56°C. In addition, a time period during which the precursor steam is supplied may be 1.5 seconds or greater.

In operation S3, an air delivery process may be performed until the atmospheric pressure of the reaction chamber reaches about 10⁻² torr (1.33 x 10⁻⁵ bar).

The maintaining of the second vacuum state (operation S4) is continued for a predetermined time period. For example, the maintaining of the second vacuum state may be for several seconds, for example, about two seconds or greater.

Next, in operation S5, a pumping operation is performed to allow the atmospheric pressure of the reaction chamber to reach the first vacuum state that is an initial state.

According to operations S1 through S5, as a result of a chemical recovery reaction from the precursor to a metal state, gold nanoparticles having a desired size are formed on the surfaces of silica microspheres.

The method according to the present exemplary embodiment is different from commonly known conventional methods in that the sedimentation of gold nanoparticles is performed in one stage. In addition, the method according to the present exemplary embodiment may provide nanoparticles having sizes which are controlled and which do not aggregate with each other after performing the method.

The method may be executed by automation equipment that includes a reaction chamber, a vacuum system, and a gas delivery system which may be controlled by using a computer.

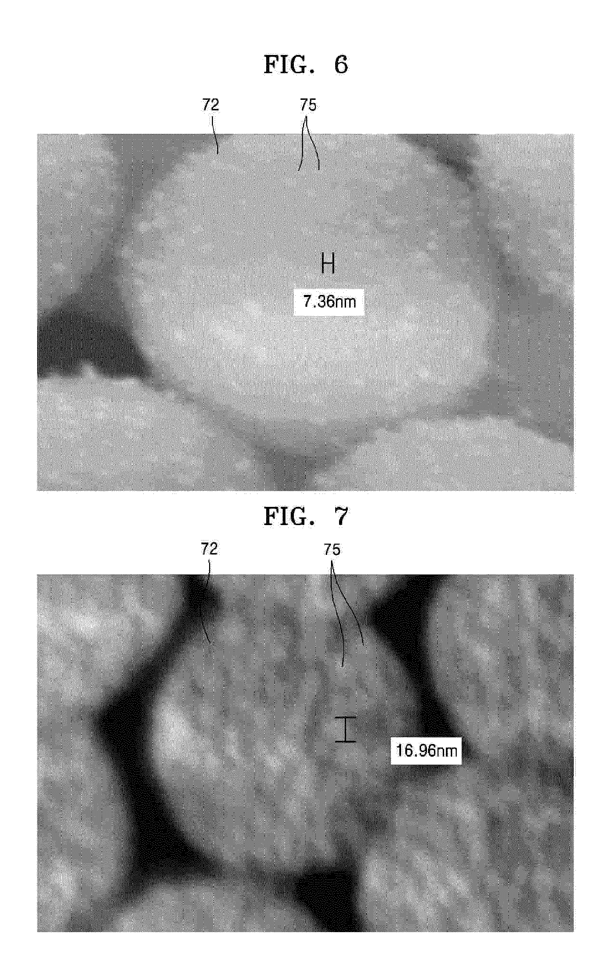

FIGS. 6 through 8 show microphotographs of various sized-nanoparticles precipitated on silica microspheres, produced according to the above described method of manufacturing nanoparticles according to an exemplary embodiment.

FIG. 6 shows a microphotograph in which gold nanoparticles 75 with a size of about 5 nm to about 10 nm have been formed on silica microspheres 72. Process conditions for forming the gold nanoparticles 75 shown in FIG. 6 are as follows. A substrate having a thickness of 2 mm and a size of 10x10 mm², in which silica microspheres having an average diameter of 210 nm are added, is disposed in a reaction chamber having an atmospheric pressure of 10⁻⁴ torr (1.33 x 10⁻⁷ bar) and is heated to a temperature of 192°C. Dipivaloylmethanate dimethylgold steam with a temperature of 45°C is supplied into the reaction chamber, and the supplied steam is maintained for 1.5 seconds. Next, an air delivery operation is performed until the atmospheric pressure of the reaction chamber reaches 10⁻² torr (1.33 x 10⁻⁵ bar). This state is maintained for 2 seconds, and then the reaction chamber returns to an initial vacuum state by a pumping operation. The number of cycles according to this example is 50.

FIG. 7 shows a microphotograph in which gold nanoparticles 75 with a size of about 10 nm to about 20 nm have been formed on silica microspheres 72. Process conditions for forming the gold nanoparticles 75 shown in FIG. 7 are as follows. A substrate having a thickness of 2 mm and a size of 10x10 mm², in which silica microspheres having an average diameter of 210 nm are added, is disposed in a reaction chamber having an atmospheric pressure of 10⁻⁴ torr (1.33 x 10⁻⁷ bar) and is heated to a temperature of 200°C. Dipivaloylmethanate dimethylgold steam with a temperature of 56°C is supplied into the reaction chamber, and the supplied steam is maintained for 2 seconds. Next, an air delivery operation is performed until the atmospheric pressure of the reaction chamber reaches 10⁻² torr (1.33 x 10⁻⁵ bar). This state is maintained for 2 seconds, and then the reaction chamber returns to an initial vacuum state by a pumping operation. The number of cycles in this example is 100.

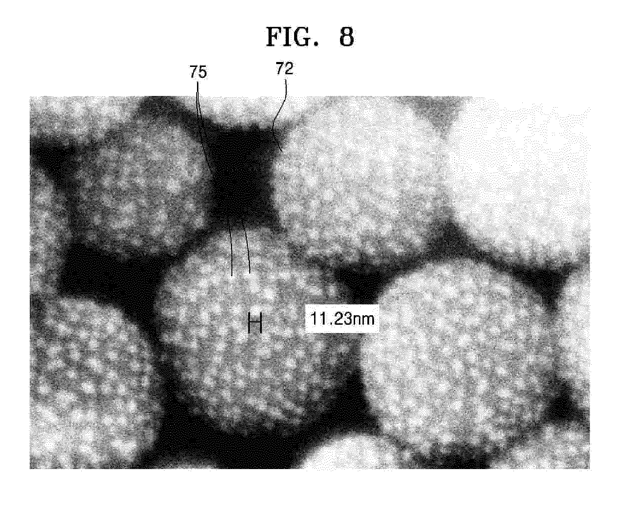

FIG. 8 shows a microphotograph in which gold nanoparticles 75 with a size of about 8 nm to about 15 nm have been formed on silica microspheres 72. Process conditions for forming the gold nanoparticles 75 shown in FIG. 8 are as follows. A substrate having a thickness of 2 mm and a size of 10x10 mm², in which silica microspheres having an average diameter of 210 nm are added, is disposed in a reaction chamber having an atmospheric pressure of 10⁻⁴ torr (1.33 x 10⁻⁷ bar) and is heated to a temperature of 230°C. Dipivaloylmethanate dimethylgold steam with a temperature of 55°C is supplied into the reaction chamber, and this state is maintained for 2.5 seconds. Next, an air delivery operation is performed until the atmospheric pressure of the reaction chamber reaches 10⁻² torr (1.33 x 10⁻⁵ bar). This state is maintained for 3 seconds, and then the reaction chamber returns to an initial vacuum state by a pumping operation. The number of cycles in this example is 30.

In the above described method, the detailed experimental conditions are examples only, and any of the described conditions, including, for example, temperature for heating the substrate, temperature of the steam, duration of reaction mixture, number of cycles, etc., may be varied to form a nanoparticle of a desired size.

The active laser medium according to exemplary embodiments described above includes nanoparticles each surrounded with a silica shell including a luminophor. As described above, the active laser medium according to exemplary embodiments achieves a significantly lower threshold of generation of laser radiation in the active laser medium than a threshold of generation of laser radiation in an active laser medium including nanoparticles without silica shells.

Accordingly, the active laser medium according to exemplary embodiments described above may be applied to a high-efficiency laser apparatus.

The above described method of manufacturing nanoparticles according to exemplary embodiments includes an operation of precipitating nanoparticles on silica microspheres, and thus, the manufacturing method according to exemplary embodiments is simple, the processing time thereof is short, and the sizes of the nanoparticles may be controlled in a very accurate fashion.

While the exemplary embodiments have been particularly shown and described, it will be understood by those of ordinary skill in the art that various changes in form and details may be made therein without departing from the scope of the present disclosure as defined by the following claims.

## Claims

1. An active laser medium comprising:
a metal nanoparticle; and
a shell surrounding the metal nanoparticle, the shell comprising a luminophor,
wherein a luminescence spectrum of the luminophor overlaps with a peak of surface plasmon resonance of the metal nanoparticle.

2. The active laser medium of claim 1, wherein the active laser medium has a form of a colloid or a form of a solid-state film.

3. The active laser medium of claim 1 or 2, wherein the luminophor comprises a plurality of quantum dots or organic dye, the quantum dot and organic dye having the luminescence spectrum that overlaps with the peak of the surface plasmon resonance of the metal nanoparticle.

4. The active laser medium of claim 3, wherein the organic dye is fluorescein.

5. The active laser medium of any of claims 1-4, wherein the shell comprises a silica material or polymer material,
and preferably, wherein the metal nanoparticle is a gold nanoparticle.

6. A laser apparatus comprising:
an active laser medium according to any of claims 1-5;
a pumping light source for radiating a pumping light to the active laser medium; and
a resonator for induction-amplifying light excited in the active laser medium by the pumping light.

7. The laser apparatus of claim 6, wherein the resonator comprises a pair of confocal mirrors that face each other across the active laser medium and are positioned such that the active laser medium is between the confocal mirrors, and preferably, wherein the active laser medium is disposed on a focal plane of the pair of confocal mirrors.

8. The laser apparatus of claim 6 or 7, wherein a focusing lens for focusing the pumping light radiated from the pumping light source on the active laser medium is disposed between the pumping light source and the active laser medium.

9. A method of manufacturing nanoparticles, the method comprising:
disposing a substrate, on which silica microspheres are added, into a reaction chamber in a first vacuum state;
heating the substrate and supplying a precursor steam onto the substrate;
delivering air into the reaction chamber and forming a second vacuum state by increasing an atmospheric pressure of the reaction chamber;
maintaining the second vacuum state for a predetermined time period; and
performing a pumping operation to allow the atmospheric pressure of the reaction chamber to reach the first vacuum state.

10. The method of claim 9, wherein the precursor steam comprises a volatile organometallic complex, and preferably:
wherein the precursor steam comprises gold,
and further preferably:
wherein the precursor steam comprises dipivaloylmethanate dimethylgold.

11. The method of claim 9 or 10, wherein the supplying of the precursor steam, the forming of the second vacuum state by increasing the atmospheric pressure of the reaction chamber, the maintaining of the second vacuum state, and the performing of the pumping operation to allow the atmospheric pressure of the reaction chamber to reach the first vacuum state are repeated for a number of repetitions until a nanoparticle with a predetermined size is formed,
and preferably:
wherein the nanoparticles each have a diameter of 5 nm to 20 nm as the predetermined size.

12. The method of claim 11, wherein the number of repetitions is from 30 to 100, and preferably:
wherein the atmospheric pressure of the first vacuum state is 10⁻⁴ torr (1.33 x 10⁻⁷ bar).

13. The method of any of claims 9-12, wherein in the supplying of the precursor steam, the substrate is heated to a temperature of 192° C to 230 °C,
and preferably:
wherein in the supplying of the precursor steam, a temperature of the precursor steam is from 45° C to 56° C.

14. The method of any of claims 9-13, wherein in the supplying of the precursor steam, a time period during which the precursor steam is supplied is 1.5 seconds or greater,
and preferably:
wherein the atmospheric pressure of the second vacuum state is 10⁻² torr (1.33 x 10⁻⁵ bar).

15. The method of any of claims 9-14, wherein a time period during which the second vacuum state is maintained is two seconds or greater.
